# EUROPÄISCHE PATENTANMELDUNG

(11) **EP 3 369 933 A1**
(43) Veröffentlichungstag der Anmeldung: **05.09.2018**
(21) Anmeldenummer: 18153810.9
(22) Anmeldetag: 29.01.2018
(51) Int. Cl.: F04D 13/06, H02K 5/22

(54) **HEIZUNGSUMWÄLZPUMPE**

(30) Priorität: 02.03.2017 DE 202017101204 U
(71) Anmelder: Grundfos Holding A/S, 8850 Bjerringbro (DK)
(72) Erfinder: KANNEGAARD ANDERSEN, Lars, 8920 Randers (DK); JØRGENSEN, Jesper, 8960 Randers (DK)
(74) Vertreter: Patentanwälte Vollmann & Hemmer

(57) **Zusammenfassung**

Die hierin offenbarte Heizungsumwälzpumpe hat ein Pumpengehäuse (1) mit darin angeordnetem Pumpenlaufrad, das von einem Elektromotor angetrieben ist, dessen Stator in einem mit dem Pumpengehäuse (1) verbundenen Motorgehäuse (8) angeordnet ist, und einem elektrischen Leitungsanschluss. Der elektrische Leitungsanschluss weist eine an einer Wandung (36) der Heizungsumwälzpumpe angeordnete Buchse (34) und einen mit der Buchse (34) korrespondierenden Stecker (35) mit einer elektrischen Leitung auf, wobei der Stecker (35) im Wesentlichen parallel zur Wandung (36) in die Buchse (34) einsteckbar ist und eine Schraubklemme (72) aufweist, wobei die Schraubklemme (72) bei eingestecktem Stecker (35) im Wesentlichen senkrecht zur Wandung (36) verläuft und nur bei nicht eingestecktem Stecker (35) von einer Stirnseite (54) des Steckers (35) schraubbar ist.

## Beschreibung

Die vorliegende Offenbarung betrifft eine Heizungsumwälzpumpe mit den im Oberbegriff des Anspruchs 1 angegebenen Merkmalen.

Heizungsumwälzpumpen aus dem Stand der Technik weisen typischerweise ein Pumpengehäuse mit einem Saug- und einem Druckstutzen sowie ein darin angeordnetes Pumpenlaufrad auf. Zum Antrieb des Pumpenlaufrads ist ein Elektromotor vorgesehen, dessen Welle das Pumpenlaufrad trägt. Der den Rotor umgebende Stator ist in einem Gehäuse angeordnet, welches an seiner zum Pumpengehäuse weisenden Seite einen Flansch oder dergleichen Anschlusselement aufweist, über den das Motorgehäuse, insbesondere das Statorgehäuse mit dem Pumpengehäuse verbunden ist. Zum elektrischen Anschluss des Motors ist ein Elektronikgehäuse, auch Klemmenkasten genannt, vorgesehen, welches an der vom Pumpengehäuse abgewandten Axialseite des Statorgehäuses angeordnet ist. Das Elektronikgehäuse umfasst typischerweise auch die Motorelektronik, also beispielsweise einen Frequenzumrichter. Eine Heizungspumpe der vorgenannten Art ist beispielsweise aus DE 10 2004 030 721 B3 bekannt.

Die aus der WO 2012/123235 A1 bekannte Heizungsumwälzpumpe weist einen feuchtigkeitsdichten und temperaturbeständigen Elektronikgehäuse für kommerzielle Kunden auf.

Die hierin offenbarte Heizungsumwälzpumpe gemäß Anspruch 1 hat demgegenüber eine erhöhte Benutzersicherheit für das Endkundengeschäft. Vorteilhafte Ausgestaltungen der Offenbarung sind in den Unteransprüchen der nachfolgenden Beschreibung und der Zeichnung angegeben.

Die hierin offenbarte Heizungsumwälzpumpe weist ein Pumpengehäuse und einen elektrischen Leitungsanschluss auf. In dem Pumpengehäuse ist ein Pumpenlaufrad angeordnet, das von einem Elektromotor angetrieben ist, dessen Stator in einem mit dem Pumpengehäuse verbundenen Motorgehäuse angeordnet ist. Der elektrische Leitungsanschluss weist eine an einer Wandung der Heizungsumwälzpumpe angeordnete Buchse und einen mit der Buchse korrespondierenden Stecker mit einer elektrischen Leitung auf. Der Stecker ist im Wesentlichen parallel zur Wandung in die Buchse einsteckbar und weist eine Schraubklemme auf, die bei eingestecktem Stecker im Wesentlichen senkrecht zur Wandung verläuft und nur bei nicht eingestecktem Stecker von einer Stirnseite des Steckers schraubbar ist. Optional ist die Buchse derart nah an der Wandung angeordnet und so orientiert, dass die Schraubklemme bei eingestecktem Stecker wegen der Wandung unzugänglich ist. Mit dem Begriff "Stirnseite" sei hierin jeweils die Seite des Steckers oder eines Bauteils davon gemeint, die bei eingestecktem Stecker zur Wandung hinweist und zu dieser parallel verläuft. Der Begriff "Stirnseite" ist hier also nur als Orientierungsbeschreibung zu verstehen und nicht als Bauteil selbst.

Die Heizungsumwälzpumpe mit diesen Merkmalen ist sicherer für das Endkundengeschäft, da die Schraubklemme des Steckers nicht bei eingestecktem Stecker zugänglich ist. Die Schraubklemme ist nur schraubbar, wenn der Stecker aus der Buchse genommen ist. Die Wandung kann dabei durch das Elektronikgehäuse bzw. den Elektronikgehäuse gebildet sein. Zusätzlich oder alternativ dazu kann die Wandung durch das Pumpengehäuse oder eine beliebige andere geeignete Wandung der Heizungsumwälzpumpe gebildet sein.

Optional weist die elektrische Leitung einen ersten Abschnitt, einen zweiten Abschnitt und einen dritten Abschnitt auf, wobei der erste Abschnitt mit einem Ende der elektrischen Leitung verbunden ist und innerhalb des Steckers bei eingestecktem Stecker im Wesentlichen parallel zur Wandung verläuft und in der Schraubklemme eingeklemmt ist, wobei der zweite Abschnitt zwischen dem ersten Abschnitt und dem dritten Abschnitt und innerhalb des Steckers bei eingestecktem Stecker im Wesentlichen senkrecht zur Wandung verläuft, und wobei der dritte Abschnitt außerhalb des Steckers verläuft. Damit kann ein im Wesentlichen gewinkelter Stecker ermöglicht werden, bei dem die Leitung bei Zugkräften am dritten Leitungsabschnitt außerhalb des Steckers sicher in der Schraubklemme sitzt und der Stecker nicht herausgezogen wird.

Optional weist der Stecker einen Steckteil und einen Deckelteil auf, wobei der Steckteil einen bei eingestecktem Stecker im Wesentlichen senkrecht zur Wandung verlaufenden Steckerboden definiert und einen aus dem Steckerboden nach unten herausragenden Steckabschnitt aufweist, dessen Form mit der Buchse korrespondiert, und wobei der Deckelteil lösbar mit dem Steckteil verbunden ist und mindestens eine Steckerwand definiert, sodass der Steckteil und der Deckelteil einen Innenraum des Steckers definieren. Dabei kann die Steckerwand umfangseitig umlaufende Wandabschnitte und einen Deckelabschnitt aufweisen und glockenförmig auf dem Steckerboden aufgesetzt sein. Während der Steckteil die sichere Sitzverbindung des Steckers in der Buchse gewährleistet, kann der Deckelteil den Innenraum des Steckers schützend einschließen, in dem sich die Schraubklemme befindet.

Optional kann der Deckelteil mit dem Steckteil über eine Schraubverbindung verbunden sein, wobei die Schraubverbindung bei eingestecktem Stecker im Wesentlichen parallel zur Wandung der Heizungsumwälzpumpe verläuft. Der Deckelteil kann dabei eine Leitungsöffnung aufweisen, die derart angeordnet und orientiert ist, dass die elektrische Leitung bei eingestecktem Stecker im Wesentlichen senkrecht zur Wandung der Heizungsumwälzpumpe in den Stecker führt. Damit wird ein stabiler und sicherer gewinkelter Stecker für die Buchse erreicht.

Optional kann die elektrische Leitung mittels einer Überwurfmutter an der Leitungsöffnung befestigt sein. Damit wird eine Zugkraft von der Leitung auf den Deckelteil des Steckers übertragen und verhindert, dass die Leitung aus der Schraubklemme gerissen wird.

Optional weist der Stecker einen inneren Kontakthalter auf, der eine erste Kontaktöffnung für die Schraubklemme aufweist, wobei die erste Kontaktöffnung an einer Stirnseite des Kontakthalters angeordnet ist, und eine zweite Kontaktöffnung für die elektrische Leitung aufweist, wobei die zweite Kontaktöffnung an einer Oberseite des Kontakthalters angeordnet ist, die im Wesentlichen senkrecht zur Stirnseite des Kontakthalters steht. Dies erhöht ebenfalls die Sitzfestigkeit der Leitung in der Schraubklemme bei Zugkräften an der Leitung.

Optional weist der Steckteil dabei einen vom Steckerboden zum Deckelteil verlaufenden Steg auf, wobei der Kontakthalter auf den Steg aufgesteckt ist und die Schraubverbindung zwischen dem Steckteil und dem Deckelteil in den Steg eingeschraubt ist. Damit wird der Steckeraufbau vereinfacht und die Bauteilvielfalt reduziert. Der Steg kann dabei einerseits als Gewinde für die Schraubverbindung zwischen Steckteil und Deckelteil dienen und andererseits als Anker für den Kontakthalter. Beim Zusammenbau des Steckers kann der Kontakthalter einfach auf den Steg gesteckt und somit fixiert werden.

Optional kann der Kontakthalter einen elektrisch leitenden Kontaktbügel enthalten, in den die Schraubklemme eingeschraubt ist, wobei der Kontaktbügel nach unten in den Steckabschnitt hineinragen und bei eingestecktem Stecker in elektrisch leitendem Kontakt mit einem Kontaktnehmer in der Buchse stehen kann. Der Steckteil hat dabei optional einen sich von einer Öffnung im Steckerboden nach unten hin verjüngenden Innenraum, in den der Kontaktbügel passgenau einsetzbar ist. Durch die Verjüngung kann eine Zentrierung und ein sitzfester Reibkontakt zwischen Kontaktbügel und Steckteil erreicht werden.

Optional kann die Heizungsumwälzpumpe eine Mehrzahl von elektrischen Leitungen und entsprechenden Schraubklemmen und Kontaktbügeln aufweisen, wobei die Mehrzahl von elektrischen Leitungen vorzugsweise in einem Kabel gebündelt ist. Dabei ist die Leitung vorzugsweise eine Spannungsversorgungsleitung für das Netzteil der Heizungsumwälzpumpe mit einem Außenleiter (Phase), einem Nullleiter und einem Masseleiter zur Versorgung der Heizungsumwälzpumpe mit Wechselstrom eines örtlichen Stromnetzes. Optional sind die Schraubklemmen und Kontaktbügel parallel zueinander angeordnet, damit die Buchse möglichst flach und platzsparend ausgestaltet werden kann.

Optional kann am Steckteil eine umlaufende Dichtungslippe bei eingestecktem Stecker das Steckteil wasserdicht mit der Buchse verschließen und reibschlüssig in der Buchse halten. Damit ist der Stecker in der Buchse gegen ein ungewolltes Abkoppeln durch Vibrationen oder andere Effekte gesichert. Optional ist auch der Innenraum des Steckers wasserdicht abgeschlossen.

Optional kann der Elektromotor nasslaufend ausgeführt sein. In Kombination mit der erhöhten Benutzersicherheit für das Endkundengeschäft ist dies besonders vorteilhaft.

Die Offenbarung ist nachfolgend anhand von in der Zeichnung dargestellten Ausführungsbeispielen näher erläutert. Es zeigen:
- Fig. 1a: in perspektivischer Darstellung ein Beispiel einer hierin offenbarten Heizungsumwälzpumpe mit nicht eingestecktem Stecker,
- Fig. 1b: in perspektivischer Darstellung ein Beispiel einer hierin offenbarten Heizungsumwälzpumpe mit eingestecktem Stecker,
- Fig. 2: eine erste Explosionsdarstellung eines Beispiels für einen Stecker der hierin offenbarten Heizungsumwälzpumpe und
- Fig. 3: eine zweite Explosionsdarstellung eines Beispiels eines Steckteils eines Steckers der hierin offenbarten Heizungsumwälzpumpe.

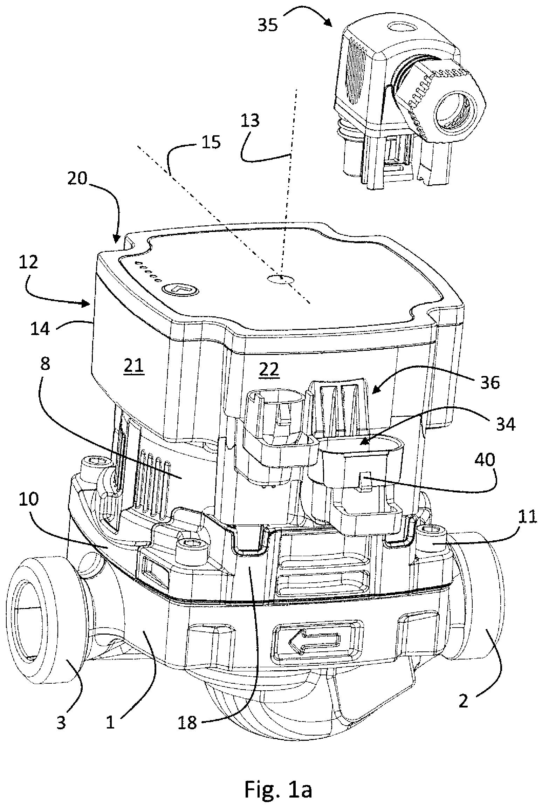

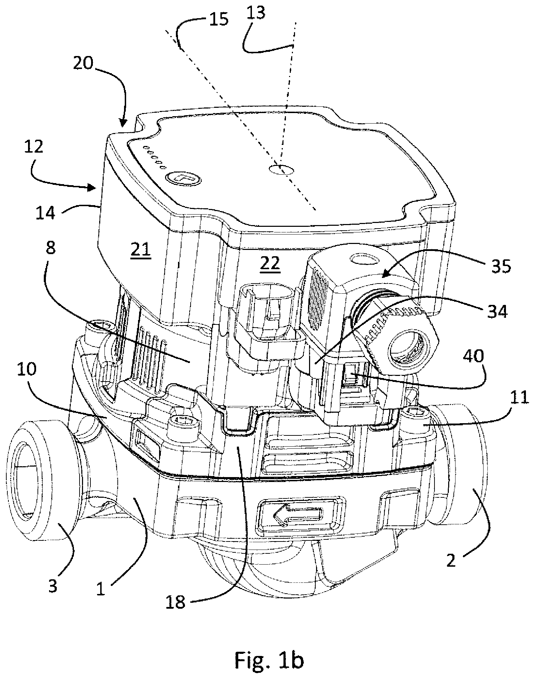

Die anhand der Figuren 1a und 1b dargestellte Heizungsumwälzpumpe weist eine Kreiselpumpe mit einem Pumpengehäuse 1 mit einem Saugstutzen 2 und einem Druckstutzen 3 mit einer dazwischen ausgebildeten Kanalführung auf, welche die vom Saugstutzen 2 kommende Flüssigkeit einem Saugmund eines innerhalb des Pumpengehäuse 1 gelagerten Pumpenlaufrads zuführt, dessen Abtriebseite an einen zum Druckstutzen 3 führenden Kanal anschließt.

Die Heizungsumwälzpumpe weist weiterhin einen Motor auf, hier einem Nasslaufmotor, dessen Rotor in einem Spaltrohr läuft, das flüssigkeitsgefüllt ist. Umgeben wird das Spaltrohr von einem Stator, d. h. von den umfangsseitig um das Spaltrohr angeordneten Motorwicklungen, sowie einem Motorgehäuse 8, welches den Stator aufnimmt. Der Rotor weist eine zentrale Welle auf, die sich bis in das Pumpengehäuse 1 erstreckt und das Pumpenlaufrad trägt, sodass die Drehbewegung des Rotors auf das Pumpenlaufrad übertragen wird.

Das Motorgehäuse 8 weist an seiner zum Pumpengehäuse 1 weisenden Seite einen Flansch 10 auf, mit dem es an das Pumpengehäuse 1 angeschlossen und über vier Schrauben 11 in den Eckbereichen des Flansches mit dem Pumpengehäuse 1 dicht und fest verbunden ist. In der dargestellten Ausführungsform bestehen Pumpengehäuse 1 und Motorgehäuse 8 aus Metall und sind als Gussteile gefertigt.

Bei den hier dargestellten Heizungsumwälzpumpen ist das Motorgehäuse 8 als metallisches Gussgehäuse ausgebildet. Für die vorliegende Offenbarung kann das Gehäuse jedoch auch durch einen vergossenen Stator gebildet werden, wie dies dann der Fall ist, wenn die Statorwicklung in Kunststoff eingegossen ist. Auch kann das Motorgehäuse als Kunststoffspritzgussteil ausgebildet sein. Es versteht sich, dass dann ein Erdungskontakt gesondert innerhalb des Kunststoffes eingegliedert ist und elektrisch leitend mit dem Statorblechpaket und dem dann metallisch ausgebildeten Spaltrohr des Motors verbunden ist.

Die Heizungsumwälzpumpe weist weiterhin ein Elektronikgehäuse 12 auf, das aus Kunststoff besteht und an der vom Pumpengehäuse 1 abgewandten Axialseite des Motorgehäuses 8 angebracht ist und das Motorgehäuse 8 zu seiner Axialseite vollständig und radial, d. h. umfangsseitig, teilweise übergreift.

Die vorstehend und nachstehend aufgeführten Raumbezeichnungen axial und radial beziehen sich auf eine Drehachse 13 des Rotors bzw. des Pumpenlaufrades. Die Axialseiten sind also die Seiten, die zur Drehachse 13 im Wesentlichen senkrecht verlaufen, wohingegen Radiolflächen die Flächen sind, welche sich parallel zur Drehachse 13 erstrecken. Eine Querachse 15 steht senkrecht zur Drehachse 13.

Das Motorgehäuse 8 weist im Flanschbereich einen abgerundeten im Wesentlichen quadratischen Querschnitt auf, wohingegen der übrige Teil des Motorgehäuses 8, also der sich zum Elektronikgehäuse 12 anschließende Teil im Wesentlichen einen kreisrunden Querschnitt aufweist und daher eine zylindermantelförmige Umfangsfläche aufweist. Während Pumpengehäuse 1 und Motorgehäuse 8 mittels vier Schrauben 11 lösbar miteinander verbunden sind, ist das aus Kunststoff bestehende Elektronikgehäuse 12 am Motorgehäuse 1 durch Schnappverbindungen befestigt. Hierzu weist das Elektronikgehäuse 12 vier sich aus den Seitenwandungen 14 des Elektronikgehäuses 12 zum Pumpengehäuse 1 hin erstreckende Zungen auf, an deren Ende seitlich Schnappvorsprünge angeordnet sind, die Schnappausnehmungen im Motorgehäuse 8 hintergreifen, welche am Motorgehäuse 8 im Bereich des Flansches 10 angeformt sind. Diese Schnappausnehmungen sind jeweils durch eine Stufe in einer rohrförmigen vom Flansch 10 zum Elektronikgehäuse 12 weisenden Führung 18 am Motorgehäuse 8 gebildet.

Das Elektronikgehäuse 12 hat in Richtung der Drehachse 13 gesehen, eine im Wesentlichen rechteckige Außenkontur und ist in den Eckbereichen, also im Bereich gedachter axialer Verlängerungen der Schrauben 11 ausgespart ausgebildet, damit die Schrauben 11 auch bei aufgesetztem Elektronikgehäuse 12 für ein aus Axialrichtung aufgesetztes Werkzeug zugänglich sind. Diese Eckausnehmungen sind mit 20 gekennzeichnet.

Bei dieser Formgebung ergeben sich bei einer vertikalen Einbaulage (Saugstutzen 2 und Druckstutzen 3 liegen vertikal übereinander, sodass die Vertikale quer zur Drehachse 13 und zur Querachse 15 verläuft) horizontale Randbereiche 21 und vertikale Randbereiche 22 des Elektronikgehäuses 12.

Die vertikalen Randbereiche 22 werden bei der dargestellten Ausführungsform zur Herausführung elektrischer Kontakte genutzt, wohingegen die horizontalen Randbereich 21 zur Anordnung von Elektronikbauteilen innerhalb des Elektronikgehäuses genutzt werden. Da baugleiche Pumpen mit Elektromotoren mit unterschiedlicher Motorelektronik ausgestattet werden können, kann bei Verwendung unterschiedlicher Klemmenkästen, die sich ausschließlich in der radialen Erstreckung der horizontalen Randbereiche 21 unterscheiden, das Innenvolumen des Elektronikgehäuses variiert werden, ohne dass die elektrischen Anschlüsse hier geändert werden müssen, und zwar weder motorseitig noch elektronikgehäuseseitig.

In den vertikalen Randbereichen 22 sind die elektrischen Kontakte angeordnet, und zwar in Achsrichtung vom Elektronikgehäuse 12 in Richtung zum Pumpengehäuse 1 gesehen sind in dem rechten vertikalen Randbereich 22 die zur Motorwicklung führenden Kontakte und im linken vertikalen Randbereich 22 die zu einem elektrischen Leitungsanschluss führenden Kontakte angeordnet.

Auf der linken Seite des vertikalen Randbereichs 22 des Elektronikgehäuses 12 ist eine Buchse 34 zum Empfang eines Steckers 35 für die Spannungsversorgung angeordnet. Die Buchse 34 und der Stecker 35 bilden zusammen den elektrischen Leitungsanschluss der Pumpe. Das Gehäuse der Buchse 34 ist hier einstückig mit dem Elektronikgehäuse 12 ausgebildet. Die Buchse 34 ist versetzt zum Elektronikgehäuse 12 neben dem Motorgehäuse 8 am Außenumfang desselben angeordnet. Der in diese Buchse 34 eingreifende Stecker 35 ist in Axialrichtung, und zwar in Richtung auf das Pumpengehäuse 1 einsteckbar (siehe Fig. 1b) und liegt dann neben dem Elektronikgehäuse 12, und zwar an einer Wandung 36 des linken vertikalen Randbereichs 22 des Elektronikgehäuses 12. Die Buchse 34 weist einen Schnappvorsprung 40 auf, der Teil einer Schnappverbindung ist, deren anderer Teil am Gegenstück, also dem Stecker 35, vorgesehen ist.

Die Buchse 34 ist als Flachmuffe ausgebildet, derart, dass ihre Kontakte jeweils nebeneinander in einer im Wesentlichen parallel zum Motorgehäuse 8 angeordneten Ebene befindlich sind. Durch diese Anordnung ist der radiale Bauraum neben dem Motorgehäuse 8 bzw. Elektronikgehäuse 12 vergleichsweise klein.

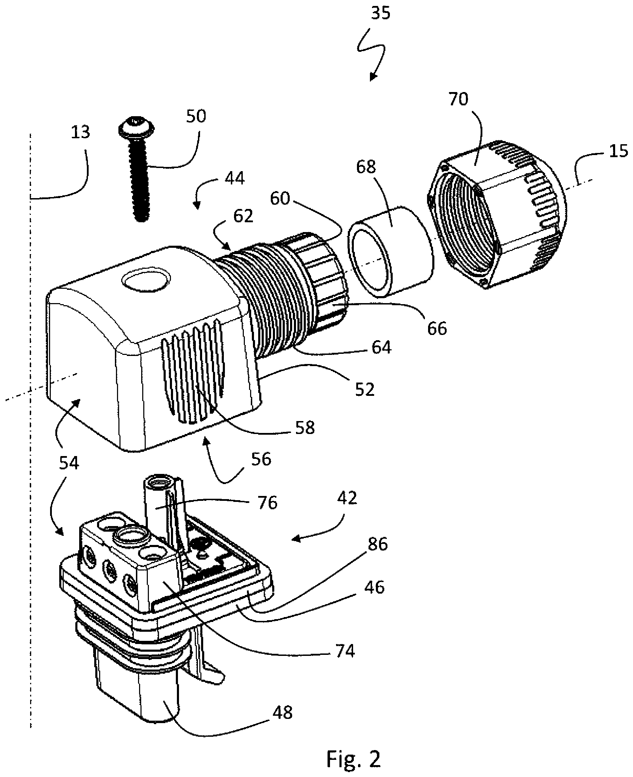

Fig. 2 zeigt den Aufbau eines Steckers 35 des elektrischen Leitungsanschlusses der in Fig. 1a und 1b gezeigten Heizungsumwälzpumpe, der mit der Buchse 34 (siehe Fig. 1a) korrespondiert und darin einsteckbar ist. Der Stecker 35 weist einen Steckteil 42 und einen Deckelteil 44 auf. Der Steckteil 42 definiert einen bei eingestecktem Stecker 35 im Wesentlichen senkrecht zur Wandung 36 verlaufenden Steckerboden 46 und weist einen aus dem Steckerboden 46 nach unten herausragenden Steckabschnitt 48 auf, dessen Form mit der Buchse 34 korrespondiert. Der Deckelteil 44 ist lösbar über eine Schraube 50 mit dem Steckteil 42 verbindbar. Die Schraubverbindung über die Schraube 50 verläuft dabei im Wesentlichen bei eingestecktem Stecker 35 parallel zur Wandung 36, z.B. entlang der Drehachse 13. Der Deckelteil 44 ist glockenförmig auf den Steckteil 42 aufsetzbar und definiert eine umlaufende Steckerwand 52. Der Steckteil 42 und der Deckelteil 44 definieren damit zusammengeschraubt einen Innenraum des Steckers 35, der wasserdicht abgeschlossen ist. Eine Stirnseite 54 der Steckerwand 52 liegt bei eingestecktem Stecker 35 im Wesentlichen parallel und nah zur Wandung 36.

Zwei Außenseiten 56 der Steckerwand 52 des Deckelteils 44 weisen außenseitig Griffbereiche 58 auf, um ein manuelles Greifen, Einstecken und Herausziehen des Steckers 35 aus der Buchse 34 zu erleichtern. Rückseitig weist die Steckerwand 52 des Deckelteils 44 eine Leitungsöffnung 60 auf, die derart angeordnet und orientiert ist, dass eine elektrische Leitung (nicht gezeigt) bei eingestecktem Stecker 35 im Wesentlichen senkrecht zur Wandung 36, z.B. entlang der Querachse 15, in den Stecker 35 führt. Die Leitungsöffnung 60 ist von einem rohrförmigen Ansatz 62 mit einem Außengewinde 64 und umlaufend angeordneten und axial verlaufenden Klemmbacken 66 gebildet. Mittels einer Klemmhülse 68 und einer Überwurfmutter 70, die auf das Außengewinde 64 aufschraubbar ist, lässt sich ein entlang der Querachse 15 in den Stecker führendes Kabel reibschlüssig mit dem Stecker 35 verbinden. Dabei drückt die Überwurfmutter 70 die Klemmbacken 66 radial nach innen, um ein Kabel einzuklemmen.

Eine elektrische Leitung (nicht gezeigt) kann einen ersten Abschnitt, einen zweiten Abschnitt und einen dritten Abschnitt aufweisen. Der erste Abschnitt ist dabei mit einem Ende der elektrischen Leitung verbunden und verläuft innerhalb des Steckers 35 bei eingestecktem Stecker 35 im Wesentlichen parallel zur Wandung 36, z.B. entlang der Drehachse 13. Der erste Abschnitt kann dabei hauptsächlich im Steckteil 42 liegen. Der zweite Abschnitt kann im Wesentlichen im Deckelteil 44 und bei eingestecktem Stecker 35 im Wesentlichen senkrecht zur Wandung 36 verlaufen, z.B. entlang der Querachse 15. Der dritte Abschnitt verläuft dann außerhalb des Steckers 35. Die elektrische Leitung kann dabei im Stecker 35 geknickt oder gebogen sein.

Der erste Abschnitt ist dabei mit drei Schraubklemmen 72 einklemmbar, wobei eine Schraubklemme 72 jeweils einen von drei Leitern in der elektrischen Leitung einklemmen kann. Die drei Leiter der elektrischen Leitung können beispielsweise ein Außenleiter (Phase), ein Nullleiter und ein Masseleiter für die Spannungsversorgung aus einem örtlichen Stromnetz sein. Die drei Schraubklemmen 72 liegen parallel zueinander in einem inneren Kontakthalter 74, der im Steckteil 42 sitzt, bei eingestecktem Stecker 35 im Wesentlichen senkrecht zur Wandung 36 verläuft und nur bei nicht eingestecktem Stecker 35 von einer Stirnseite 54 des Steckers 35 schraubbar ist. Bei eingestecktem Stecker 35 ist die Schraubklemme 72 wegen der Wandung 36 selbst bei abgeschraubtem Deckelteil 44 unzugänglich.

Der Steckteil 42 weist einen vom Steckerboden 46 nach oben zum Deckelteil 44 ragenden Steg 76 auf, wobei der Kontakthalter 74 auf den Steg 76 aufgesteckt ist und die Schraube 50 zwischen dem Steckteil 42 und dem Deckelteil 44 in den Steg 76 eingeschraubt ist.

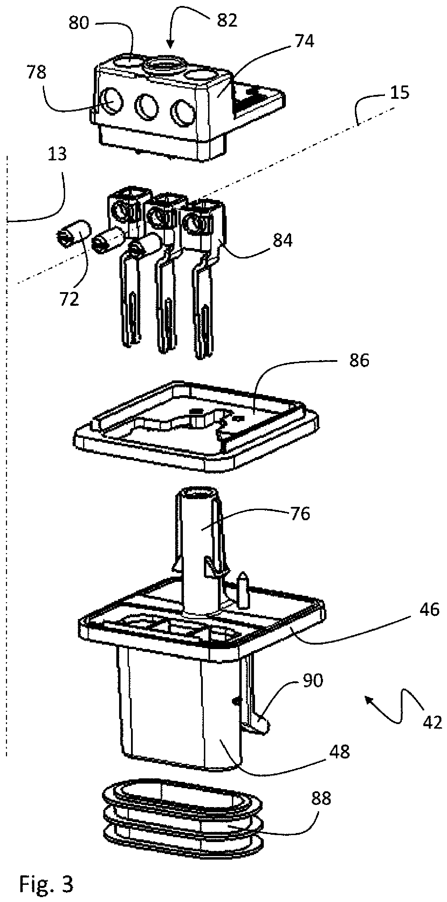

In Fig. 3 ist der Aufbau des Steckteils 42 genauer zu sehen. Der Kontakthalter 74 weist erste Kontaktöffnungen 78 für die Schraubklemmen 72 auf, wobei die ersten Kontaktöffnungen an einer Stirnseite 54 des Kontakthalters 74 angeordnet sind. Ferner weist der Kontakthalter 74 zweite Kontaktöffnungen 80 für die elektrische Leitung auf, wobei die zweiten Kontaktöffnungen 80 an einer Oberseite 82 des Kontakthalters 74 angeordnet sind, die im Wesentlichen senkrecht zur Stirnseite 54 des Kontakthalters 74 steht.

Der Kontakthalter 74 hält drei parallel zueinander angeordnete elektrisch leitende Kontaktbügel 84, in die die drei Schraubklemmen 72 jeweils entlang der Querachse 15 eingeschraubt sind. Der erste Abschnitt der elektrischen Leitung (nicht gezeigt) verläuft entlang der Drehachse 13 in den Kontaktbügeln 84 und ist lateral mit den Schraubklemmen 72 darin eingeklemmt. Eine Dichtungsscheibe 86 aus beispielsweise Gummi kann zum einen für eine umfangseitig umlaufend wasserdichte Verbindung bei der Verschraubung von Steckteil 42 und Deckelteil 44 sorgen und zum anderen einen Rahmen definieren für einen passgenauen Sitz von Kontakthalter 74 und Deckelteil 44.

Vom Steckerboden 46 des Steckteils 42 erstreckt sich nach oben der Steg 76 und nach unten der mit der Buchse 34 korrespondierende Steckabschnitt 48. Die Kontaktbügel 84 ragen in einen sich nach unten verjüngenden Innenraum des Steckabschnitts 48, um bei eingestecktem Stecker 35 in elektrisch leitendem Kontakt mit entsprechenden Kontaktnehmern in der Buchse 34 zu stehen. Am Steckabschnitt 48 des Steckteils 42 ist eine umlaufende Dichtungslippe 88 vorgesehen, die bei eingestecktem Stecker 35 das Steckteil 42 wasserdicht mit der Buchse 34 verschließt und reibschlüssig in der Buchse 34 hält. Zur zusätzlichen Sicherung des Steckers 35 in der Buchse 34 kann der Steckteil 42 Rastmittel 90 aufweisen, die Teil einer Schnappverbindung bilden und in den Schnappvorsprung 40 der Buchse 34 greifen. Zum Lösen des Steckers 35 kann dann ein Lösen der Schnappverbindung mit den Fingern oder einem geeigneten Werkzeug erforderlich sein.

### Bezugszeichenliste

- 1: - Pumpengehäuse
- 2: - Saugstutzen
- 3: - Druckstutzen
- 8: - Motorgehäuse
- 10: - Flansch des Motorgehäuses
- 11: - Schrauben
- 12: - Elektronikgehäuse
- 13: - Drehachse des Motors
- 14: - Seitenwand des Elektronikgehäuses
- 15: - Querachse des Motors
- 18: - Führungen
- 20: - Eckausnehmungen
- 21: - horizontale Randbereiche des Elektronikgehäuses
- 22: - vertikale Randbereiche des Elektronikgehäuses
- 34: - Buchse des Leitungsanschlusses
- 35: - Stecker des Leitungsanschlusses
- 36: - Wandung
- 40: - Schnappvorsprung an der Buchse
- 42: - Steckteil
- 44: - Deckelteil
- 46: - Steckerboden
- 48: - Steckabschnitt
- 50: - Schraube
- 52: - Steckerwand
- 54: - Stirnseite
- 56: - Außenseite
- 58: - Griffbereiche
- 60: - Leitungsöffnung
- 62: - rohrförmiger Ansatz
- 64: - Außengewinde
- 66: - Klemmbacken
- 68: - Klemmhülse
- 70: - Überwurfmutter
- 72: - Schraubklemme
- 74: - Kontakthalter
- 76: - Steg
- 78: - erste Kontaktöffnungen
- 80: - zweite Kontaktöffnungen
- 82: - Oberseite
- 84: - Kontaktbügel
- 86: - Dichtungsscheibe
- 88: - Dichtungslippe
- 90: - Rastmittel

## Patentansprüche

1. Heizungsumwälzpumpe mit einem Pumpengehäuse (1) mit darin angeordnetem Pumpenlaufrad, das von einem Elektromotor angetrieben ist, dessen Stator in einem mit dem Pumpengehäuse (1) verbundenen Motorgehäuse (8) angeordnet ist, und einem elektrischen Leitungsanschluss, **dadurch gekennzeichnet, dass** der elektrische Leitungsanschluss eine an einer Wandung (36) der Heizungsumwälzpumpe angeordnete Buchse (34) und einen mit der Buchse (34) korrespondierenden Stecker (35) mit einer elektrischen Leitung aufweist, wobei der Stecker (35) im Wesentlichen parallel zur Wandung (36) in die Buchse (34) einsteckbar ist und eine Schraubklemme (72) aufweist, wobei die Schraubklemme (72) bei eingestecktem Stecker (35) im Wesentlichen senkrecht zur Wandung (36) verläuft und nur bei nicht eingestecktem Stecker (35) von einer Stirnseite (54) des Steckers (35) schraubbar ist.

2. Heizungsumwälzpumpe nach Anspruch 1, wobei die Buchse (34) derart nah an der Wandung (36) angeordnet und so orientiert ist, dass die Schraubklemme (72) bei eingestecktem Stecker (35) wegen der Wandung (36) unzugänglich ist.

3. Heizungsumwälzpumpe nach Anspruch 1 oder 2, wobei die elektrische Leitung einen ersten Abschnitt, einen zweiten Abschnitt und einen dritten Abschnitt aufweist, wobei der erste Abschnitt mit einem Ende der elektrischen Leitung verbunden ist und innerhalb des Steckers (35) bei eingestecktem Stecker (35) im Wesentlichen parallel zur Wandung (36) verläuft und mit der Schraubklemme (72) eingeklemmt ist, wobei der zweite Abschnitt zwischen dem ersten Abschnitt und dem dritten Abschnitt und innerhalb des Steckers (35) bei eingestecktem Stecker (35) im Wesentlichen senkrecht zur Wandung (36) verläuft, und wobei der dritte Abschnitt außerhalb des Steckers (36) verläuft.

4. Heizungsumwälzpumpe nach einem der vorhergehenden Ansprüche, wobei der Stecker (36) einen Steckteil (42) und einen Deckelteil (44) aufweist, wobei der Steckteil (42) einen bei eingestecktem Stecker (35) im Wesentlichen senkrecht zur Wandung (36) verlaufenden Steckerboden (46) definiert und einen aus dem Steckerboden (46) nach unten herausragenden Steckabschnitt (48) aufweist, dessen Form mit der Buchse (34) korrespondiert, und wobei der Deckelteil (44) lösbar mit dem Steckteil (42) verbunden ist und mindestens eine Steckerwand (52) definiert, sodass der Steckteil (42) und der Deckelteil (44) einen Innenraum des Steckers (35) definieren.

5. Heizungsumwälzpumpe nach Anspruch 4, wobei der Deckelteil (44) mit dem Steckteil (42) über eine Schraubverbindung verbunden ist, wobei die Schraubverbindung bei eingestecktem Stecker (35) im Wesentlichen parallel zur Wandung (36) der Heizungsumwälzpumpe verläuft.

6. Heizungsumwälzpumpe nach Anspruch 4 oder 5, wobei der Deckelteil (44) eine Leitungsöffnung (60) aufweist, die derart angeordnet und orientiert ist, dass die elektrische Leitung bei eingestecktem Stecker (35) im Wesentlichen senkrecht zur Wandung (36) der Heizungsumwälzpumpe in den Stecker (35) führt.

7. Heizungsumwälzpumpe nach Anspruch 6, wobei die elektrische Leitung mittels einer Überwurfmutter (70) an der Leitungsöffnung (60) befestigt ist.

8. Heizungsumwälzpumpe nach einem der vorhergehenden Ansprüche, wobei der Stecker (35) einen inneren Kontakthalter (74) aufweist, der eine erste Kontaktöffnung (78) für die Schraubklemme (72) aufweist, wobei die erste Kontaktöffnung (78) an einer Stirnseite (54) des Kontakthalters (74) angeordnet ist, und eine zweite Kontaktöffnung (80) für die elektrische Leitung aufweist, wobei die zweite Kontaktöffnung (80) an einer Oberseite (82) des Kontakthalters (74) angeordnet ist, die im Wesentlichen senkrecht zur Stirnseite (54) des Kontakthalters steht.

9. Heizungsumwälzpumpe nach Anspruch 8, wobei der Steckteil (42) einen vom Steckerboden (46) nach oben zum Deckelteil (44) ragenden Steg (76) aufweist, wobei der Kontakthalter (74) auf den Steg (76) aufgesteckt ist und die Schraubverbindung zwischen dem Steckteil (42) und dem Deckelteil (44) in den Steg (76) eingeschraubt ist.

10. Heizungsumwälzpumpe nach Anspruch 8 oder 9, wobei der Kontakthalter (74) einen elektrisch leitenden Kontaktbügel (84) hält, in den die Schraubklemme (72) eingeschraubt ist.

11. Heizungsumwälzpumpe nach Anspruch 10 und einem der Ansprüche 4 bis 9, wobei der Kontaktbügel (84) in den Steckabschnitt (48) ragt und bei eingestecktem Stecker (35) in elektrisch leitendem Kontakt mit einem Kontaktnehmer in der Buchse (34) steht.

12. Heizungsumwälzpumpe nach einem der vorhergehenden Ansprüche, wobei die Heizungsumwälzpumpe eine Mehrzahl von elektrischen Leitungen und entsprechenden Schraubklemmen (72) und Kontaktbügeln (84) aufweist, wobei die Mehrzahl von elektrischen Leitungen vorzugsweise in einem Kabel gebündelt ist.

13. Heizungsumwälzpumpe nach Anspruch 12, wobei die Mehrzahl von Schraubklemmen (72) und Kontaktbügeln (84) parallel zueinander angeordnet sind.

14. Heizungsumwälzpumpe nach einem Ansprüche 4 bis 13, wobei am Steckteil (42) eine umlaufende Dichtungslippe (88) bei eingestecktem Stecker (35) das Steckteil (42) wasserdicht mit der Buchse (34) verschließt und reibschlüssig in der Buchse (34) hält.

15. Heizungsumwälzpumpe nach einem der Ansprüche 4 bis 14, wobei der Innenraum des Steckers (35) wasserdicht abgeschlossen ist.

16. Heizungsumwälzpumpe nach einem der vorhergehenden Ansprüche, wobei der Elektromotor nasslaufend ausgeführt ist.
